## Europäisches Patentamt

## European Patent Office

## Office européen des brevets

(11) Veröffentlichungsnummer: **0 093 288**

**A1**

(12) # EUROPÄISCHE PATENTANMELDUNG

(21) Anmeldenummer: **83103549.8**

(51) Int. Cl.³: **G 05 B 19/18**

(22) Anmeldetag: **13.04.83**

(30) Priorität: 03.05.82 CH 2696/82

(43) Veröffentlichungstag der Anmeldung:
09.11.83 Patentblatt 83/45

(84) Benannte Vertragsstaaten:
AT CH DE FR GB IT LI SE

(71) Anmelder: Werkzeugmaschinenfabrik Oerlikon-Bührle AG
Birchstrasse 155
CH-8050 Zürich(CH)

(72) Erfinder: Schultschik, Robert, Dr. Ing.
Tägerackerstrasse 33a
D-8610 Uster(DE)

(54) **Vorrichtung zur automatischen Verstellung der Radialposition eines Planschiebers eines Planverstellkopfes an einer Zerspanungsmaschine.**

(57) Bei dieser Vorrichtung ist ein Planverstellkopf (12) dessen Planschieber (14) mittels einem Verstellantrieb (21) und einem Verstellmechanismus (16) in einer Planverstellrichtung (44) verschiebbar angeordnet ist, in einer drehbaren Spindel (10) gelagert, die auf einem, in einer Schlittenbewegungsrichtung (43) quer zur Spindel (10) verschiebbaren Schlitten (4) angeordnet ist. Weiter ist eine numerische Steuerung (28) vorgesehen.

Um die Radialposition eines Planschiebers (14) mit grösserer Genauigkeit einstellen zu können, ist ein Taster (20) mit dem Verstellantrieb (21) am einen Ende des Schlittenverschiebeweges fest angeordnet. Ein Einstellzyklus (29) regelt die Verstellung des Planschiebers (14) in Verbindung mit dem Taster (20) und dem Verstellantrieb (21).

./...

FIG. 1

Vorrichtung zur automatischen Verstellung der Radialposition eines Planschiebers eines Planverstellkopfes an
einer Zerspanungsmaschine

Die Erfindung bezieht sich auf eine Vorrichtung zur automatischen Verstellung der Radialpostion eines Planschiebers eines Planverstellkopfes an einer Zerspanungsmaschine mit einer drehbaren Spindel zur Aufnahme des
Planverstellkopfes dessen Planschieber mittels einem Verstellantrieb und einem Verstellmechanismus in einer Planverstellrichtung verschiebbar angeordnet ist, mit einem
die Spindel aufnehmenden, in einer Schlittenbewegungsrichtung quer zur Spindel verschiebbaren Schlitten sowie
mit einer numerischen Steuerung.

Aus der Praxis ist eine Vorrichtung gemäss dem Oberbegriff
des Patentanspruches 1 bereits bekannt. Dabei ist der
Planschieber des Planverstellkopfes kontinuierlich, während der Drehung der Spindel verstellbar. Dies geschieht
durch einen an einem Spindelschlitten befestigten Verstellantrieb für einen Verstellmechanismus im Planverstellkopf. Der Verstellmechanismus umfasst dabei ein Differentialgetriebe, in welches eine Verstellgrösse in Form
einer zeitlich begrenzten Drehzahldifferenz eingegeben
werden kann. Diese Drehzahldifferenz aktiviert den Verstellmechanismus.Die genaue Radialposition des Planschiebers wird dabei durch einen Messtaster am Werstück ermittelt und in die numerische Steuerung eingegeben, welche daraus die Verstellgrösse ableitet.

Bei einer solchen Vorrichtung wird bei langandauernder Bearbeitung im Differentialgetriebe Wärme frei, die sich im
Planverstellkopf ausbreitet und somit auch die Position
des Werkzeuges beeinflusst. Daraus ergeben sich Fehler
die bei einer Schlichtbearbeitung unzulässig sind. Zusätzlich wirken sich auch die Fehler des Verstellgetriebes auf die Radialposition des Werkzeuges aus. Mit einer solchen Vorrichtung ist eine Schruppbearbeitung, bei der hohe Schnittkräfte auftreten nicht gut durchführbar, da der Planschieber nicht in seiner gewünschten Position festklemmbar ist. Die nach dem Verstellen des Planschiebers eingenommene wirkliche Radialposition des Werkzeuges wird durch diese Anordnung nicht überprüft.

Die Erfindung, wie sie in den Ansprüchen gekennzeichnet ist, löst die Aufgabe eine Vorrichtung zur automatischen Verstellung der Radialposition eines Planschiebers eines Planverstellkopfes an einer Zerspanungsmaschine zu schaffen, mit der eine genauere Einstellung der Radialposition des Planschiebers möglich ist.

Die durch die Erfindung erreichten Vorteile sind im wesentlichen darin zu sehen, dass die wirkliche Position des Werkzeuges nach der Verstellung des Planschiebers durch Berührung mit einem Taster überprüft wird. Durch die spezielle Anordnung des Tasters und des Verstellantriebes wird der Arbeitsraum der Zerspanungsmaschine nicht eingeschränkt. Sowohl der Einsatz eines Werkzeugwechslers wie auch eines Palettenwechslers ist ungehindert möglich. Es sind ebenfalls Planverstellköpfe mit grossen Verstellbereichen für den Planschieber wie auch Planverstellköpfe mit Planschieberklemmung einsetzbar. Die erreichbare Einstellgenauigkeit des Planschiebers ermöglicht ebenfalls Schlichtbearbeitung. Ferner ist der Einsatz von Planverstellköpfen möglich, die mehr als ein Werkzeug aufweisen. Durch geeignete Programmierung einer programmierbaren Steuereinheit kann der Planschieber zuerst auf das eine Werkzeug, beispielsweise ein Schruppwerkzeug und anschliessend auf ein anderes ebenfalls darauf befestigtes Werkzeug, beispielsweise ein Schlichtwerkzeug eingestellt werden.

Im folgenden wird die Erfindung anhand von einen Ausführungsweg darstellenden Zeichnungen näher erläutert. Es zeigt:

Fig. 1   eine schematische Darstellung einer erfindungsgemässen Anordnung.

Fig. 2   einen Teil einer schematischen Anordnung gemäss Fig. 1

Fig. 3   ein Detail der erfindungsgemässen Anordnung

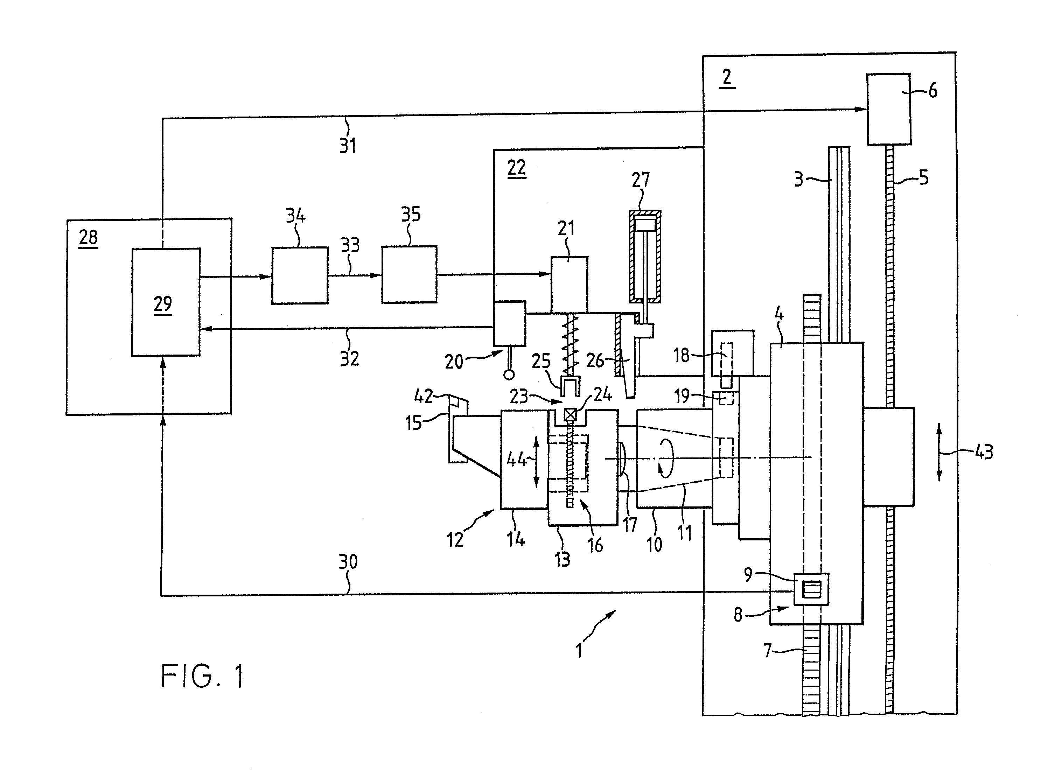

In Fig. 1 ist, schematisch dargestellt, ein Teil einer Zerspanungsmaschine 1 ersichtlich. In diesem Beispiel handelt es sich um ein Bohr- und Fräswerk, von dem ein Teil eines Ständers 2 ersichtlich ist. Dieser weist eine Führung 3 für einen Schlitten 4 auf, der längs der Führung 3 in einer Schlittenbewegungsrichtung 43 hin- und herbewegbar angeordnet ist. Je nach Art der Zerspanungsmaschine 1 ist der Ständer 2 in einer oder mehreren Richtungen parallel und/oder senkrecht zur Zeichnungsebene in nicht näher dargestellter, aber bekannter Art verschiebbar angeordnet. Der Schlitten 4 ist mit einer Verstellspindel 5 im Eingriff, die von einem Schlittenantrieb 6 angetrieben werden kann, zum Bewegen des Schlittens 4. Parallel zur Führung 3 und auf dem Ständer 2 befestigt ist beispielsweise eine Skala 7 eines Maschinenmesssystems 8 . Auf dem Schlitten 4 ist entsprechend eine Ableseeinrichtung 9 des Maschinenmesystems 8 befestigt. Ein solches Maschinenmesssystem 8 ist an sich bekannt und unter dem Namen Inductosyn im Handel erhältlich. Es ist auch Teil einer numerischen Steuerung 28.

Auf dem Schlitten 4 ist weiter eine drehbare und angetriebene Spindel 10 ersichtlich, die wiederum eine an sich bekannte Werkzeugaufnahme- und Spannvorrichtung 11 für Werkzeuge enthält. In die Spindel 10 ist ein Planverstellkopf 12 eingesetzt. Dieser besteht aus einem Spindeleinsatz 13, einem verstellbaren Planschieber 14 mit einem Werkzeug 15. Der Planschieber 14 ist in einer Planverstellrichtung 44 auf dem Spindeleinsatz 13 verschiebbar angeordnet. Zum Verschieben des Planschiebers 14 enthält der Planverstellk opf 12 einen Verstellmechanismus 16, der beispielsweise aus einem Spindelgetriebe bestehen kann. Wahlweise kann der Planverstellkopf 12 mit einer Planschieberklemmung versehen sein. Eine solche Planverschieberklemmung ist in der Schweizer Patentanmeldung        näher erläutert. Diese ist hier nicht näher dargestellt, kann aber beispielsweise durch Druck auf einen Bolzen 17 aufgehoben werden. Die Spindel 10 ist weiter mit einer an sich bekannten und deshalb hier nicht näher dargestellten Indexiervorrichtung ausgerüstet. Ein am Schlitten 4 bewegbar gelagerter Indexierbolzen 18 greift in der indexierten Position der Spindel 10 in eine Nut 19 an der Spindel 10 ein, so dass die Spindel 10 in dieser Position festgehalten ist.

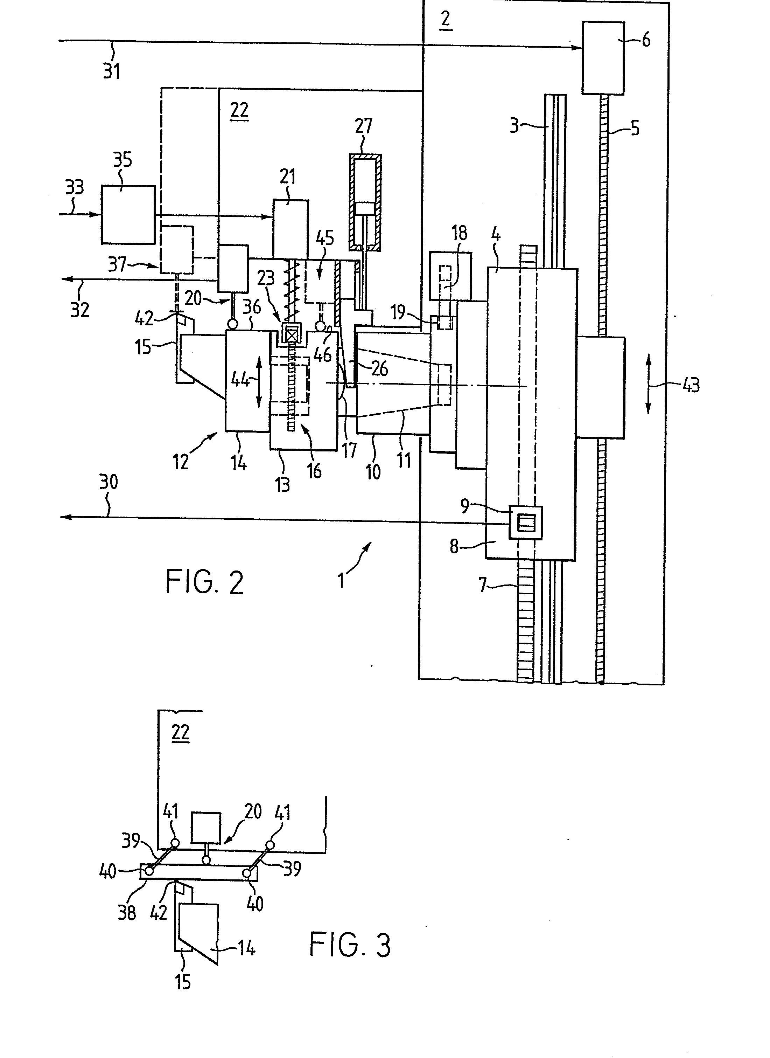

In der in Fig.1 gezeigten Stellung befindet sich der Schlitten 4 im Endbereich seines durch die Führung 3 vorgegebenen Schlittenverschiebeweges. Am Ende dieses Schlittenverschiebeweges ist ein Taster 20 sowie ein Verstellantrieb 21 für den Verstellmechanismus 16 fest an einem Ausleger 22 angeordnet. Zwischen dem Verstellantrieb 21 und dem Verstellmechanismus 16 ist eine Kupplung 23 vorgesehen. Diese besteht beispielsweise aus einem Vierkant 24 und einer teleskopierbaren Gabel 25. Ist der Einsatz eines Planschieberverstellkopfes 12 mit einer Planschieberklemmung vorgesehen, so ist ferner am Ausleger 22 eine ausfahrbare Keilgabel 26 vorgesehen, die in ausgefahrener Stellung (Fig.2) auf den Bolzen 17 drückt, womit die Planschieberklemmung aufgehoben und der Planschieber 14 leicht verstellt werden kann. Die Keilgabel 26 wird beispielsweise durch einen Hydraulikzylinder 27 bewegt.

Zur Steuerung der Zerspanungsmaschine 1 ist in an sich bekannter Weise eine numerische Steuerung (CNC) 28 vorgesehen. Als Teil davon, darin eingebaut, oder daran angeschlossen ist weiter ein Einstellzyklus 29. Ein solcher Einstellzyklus 29 ist mit einem parametrierbaren Unterpro gramm realisierbar z.B. mit einem frei programmierbaren Anwenderzyklus (CPC) Bosch Mikro 8. Dieser ist über Leitungen 30,31 und 32 mit dem Maschinenmesssystem 8, dem Schlittenantrieb 6 und dem Taster 20 verbunden. Eine weitere Leitung 33 verbindet den Einstellzyklus 29 mit dem Verstellantrieb 21. Ist als Verstellantrieb 21 ein Schrittmotor vorgesehen, so ist in die Leitung 33 weiter ein Rampengenerator 34 und ein Verstärker 35 eingeschaltet.

Fig. 2 zeigt dieselbe Zerspanungsmaschine 1 wie Fig. 1. Dabei ist der Schlitten 4 etwa in seiner Endstellung eingezeichnet. Man erkennt dabei, dass der Taster 20 beispielsweise eine Referenzfläche 36 des Planschiebers 14 berührt. Ebenso ist die Kupplung 23 hier eingerückt gezeichnet und die Keilgabel 26 betätigt den Bolzen 17.

Wie in Fig. 2 gestrichelt eingezeichnet, ist es ebenfalls möglich einen Taster 37 so anzuordnen, dass er auf die Spitze 42 eines Werkzeuges 15 ausgerichtet ist. Bei den Tastern 20 und 37 handelt es sich vorzugsweise um Taster, die eine Nullstellung anzeigen, die also bei Abweichung von der Nullstellung ein Fehlersignal abgeben.

Es ist weiter möglich, einen Taster 20 oder 37 in Verbindung mit einem weiteren Taster 45 vorzusehen, der auf eine Referenzfläche 46 am Spindeleinsatz 13 ausgerichtet ist. Dabei muss aber der Taster 45 als Wegmesser ausgebildet sein, d.h. als Taster, der ein Signal abgibt, das proportional zur Auslenkung des Tasters 45 durch eine Referenzfläche 46 ist. Es ist ebenfalls möglich den Taster 20 oder 37 mit dem Taster 45 zu vertauschen, so dass der Wegmesser auf den Planschieber 14 ausgerichtet ist. Der Taster 45 ist über eine hier nicht näher dargestellt Leitung mit dem Einstellzyklus 29 verbunden. Aus Fig. 3 ist eine Tasteranordnung ersichtlich, bei der dem Taster 20 ein Lineal 38 vorgeschaltet ist. Dieses ist an zwei Hebeln 39 über zwei Gelenkpunkte 40 am Lineal 38 und zwei Gelenkpunkte 41 am Ausleger 22 befestigt und bildet somit eine Gelenkviereckanordnung.

## Wirkungsweise

Es sei angenommen, dass das Werkzeug 15, in diesem Falle beispielsweise ein Drehstahl, mit seiner Schneide auf einen grösseren Durchmesser eingestellt werden soll. Zu diesem Zweck wird der Schlitten 4 mit der Spindel 10 aus dem hier nicht näher dargestellten Arbeitsbereich der Zerspanungsmaschine 1 herausgefahren und demjenigen Ende seines Schlittenverschiebeweges zugeführt, das den Taster 20 und den Verstellantrieb 21 aufweist. Dabei wird die Spindel 10 in ihre indexierte Stellung gebracht, so dass der Indexierbolzen 18 in die Nut 19 eingreifen kann. Die Spitze 42 des Werkzeuges 15 befindet sich dabei in der äussersten, dem Taster 20 zugewandten Stellung. Die Planverstellrichtung 44 des Planverstellkopfes 12 ist somit parallel der Schlittenbewegungsrichtung 43.

Zuerst erreicht der Schlitten 4 eine Vorposition. In dieser Vorposition muss die Kupplung 23 eingekuppelt sein. Da es aber nicht sicher ist ob der Vierkant 24 und die Gabel 25 so zueinander stehen, dass sie ineinander greifen können, ist die Gabel 25 teleskopierbar. Greift die Kupplung 23 noch nicht, so wird sie aber in dieser Vorposition greifen, sobald der Verstellantrieb 21 die Gabel 25 leicht gedreht hat. In der Vorposition des Schlittens 4 greift somit die Kupplung 23 auf jeden Fall sobald der Verstellantrieb 21 betätigt wird. Ist der Planverstellkopf 12 mit einer Planschieberklemmung ausgerüstet, die
den Planschieber 14 am Spindeleinsatz 13 fest verankert,
so muss die Planschieberklemmung gelöst werden wenn der
Schlitten 4 die Vorposition erreicht hat. Dies geschieht
beispielsweise indem der Hydraulikzylinder 27 die Keilgabel 26 absenkt, so dass diese den Bolzen 17 am Spindeleinsatz 13 verschiebt.

In der Vorposition wird der Schlitten 4 nicht angehalten.
Die Vorposition ist somit lediglich diejenige Stellung
des Schlittens 4 in der die Kupplung 23 und die Keilgabel
26 zum Einsatz gelangen.

Anschliessend fährt der Schlitten 4 langsam in derselben
Richtung weiter, bis eine Referenzposition erreicht ist.
Wo die Referenzposition liegt ist zuvor durch die numerische Steuerung 28 aufgrund des in die numerische Steuerung 28 eingegebenen Auftrages ermittelt worden.

Besteht der Auftrag beispielsweise darin das Werkzeug
oder die Referenzfläche 36 des Planschiebers 14 auf einen
gewünschten Radius R zu bringen, der grösser ist als der
zuvor eingestellte Radius R , so laufen folgende Vorgänge
ab:

Aufgrund des zuvor eingestellten Radius $R_A$ ist der numerischen Steuerung 28 diejenige Stellung des Schlittens 4,
in welcher bei Berührung des Tasters 20 mit der Referenzfläche 36 der Taster 20 kein Fehlersignal abgibt, der sogenannten Nullstellung des Tasters 20, bekannt. Nun wird
durch die Steuerung 28 die neue Referenzposition des
Schlittens 4 bestimmt, in welcher der Taster 20 bei Berührung mit der Referenzfläche 36 seine Nullstellung erreicht. Diese neue Referenzposition ist um einen Abstand

$R - R_A$ gegenüber der Referenzposition des Schlittens 4 die dem Radius $R_A$ entspricht, vorverschoben.

Hat der Schlitten 4 diese dem Radius R entsprechende und durch die Steuerung 28 vorgegebene Referenzposition erreicht, so bleibt er dort stehen. In dieser Stellung berührt die Referenzfläche 36 den Taster 20 noch nicht, da sie ja immer noch auf den Radius $R_A$ eingestellt ist. Somit gibt der Taster 20 ein Fehlersignal über die Leitung 32 an den Einstellzyklus 29 ab. Dieser gibt über Leitung 33 dem Verstellantrieb 21 den Befehl sich in der Verstellrichtung 44 zu bewegen, so dass der Verstellmechanismus 16 den Planschieber 14 nach aussen bewegt. Hat der Taster 20 seine Nullstellung erreicht, so gibt er kein Fehlersignal mehr ab und der Verstellantrieb 21 stellt ab.

Besteht beispielsweise der Auftrag an die numerische Steuerung 28, denn eine hier nicht näher dargestellte aber bekannte Eingabestation ist direkt an die numerische Steuerung 28 angeschlossen oder ist sogar Teil davon, darin, den Radius R des Werkzeuges auf den Radius $R_I$ zu verkleinern, so laufen folgende Vorgänge ab:

Der Schlitten 4 fährt mit der Spindel 10 aus dessen Arbeitsbereich weg und nähert sich dem Taster 20 oder 37 und dem Verstellantrieb 21. Dabei wird die Position des Schlittens 4 laufend durch die Ableseeinrichtung 9 des Maschinenmesssystems 8 überwacht und über die Leitung 30 an die numerische Steuerung 28 weitergegeben. Hat der Schlitten 4 die Vorposition erreicht, so wird die Kupplung 23 eingerückt und die Keilgabel 26 senkt sich ab, sofern der Planverstellkopf 12 eine Planschieberklemmung aufweist.

Inzwischen hat die numerische Steuerung 28 auch schon bestimmt, in welcher Referenzposition der Schlitten 4 anhalten soll. Diese Referenzposition ist um den Verstellbetrag $R - R_i$ gegenüber der dem Radius R zugeordneten bisherigen Referenzposition des Schlittens 4 zurückverschoben. Beim Eintreffen des Schlittens 4 in der neuen Referenzposition wird der Taster 20 oder 37 bereits berührt und sendet über Leitung 32 ein Fehlersignal an den Einstellzyklus 29. Dieser setzt über Leitung 33 den Verstellantrieb 21 in Gang, so dass der Planschieber 14 in seiner Planverstellrichtung 44 sich vom Taster 20 oder 37 entfernt bis dieser kein Fehlersignal mehr an den Einstellzyklus 29 abgibt. Dies für den Fall, dass der Taster 20 oder 37 genügend beweglich ist um den grösstmöglichen Verstellbetrag $R_A - R_i$ des Planschiebers 14 aufzunehmen. Hat aber der Taster 20 oder 37 nur einen sehr kleinen Hub um seine Nullstellung, so muss der Einstellzyklus 29 so programmiert sein, dass sobald der Taster 20 oder 37 ein Fehlersignal abgibt, der Schlittenantrieb 6 ausgeschaltet wird bis der inzwischen eingeschaltete Verstellantrieb 21 den Planschieber 14 soweit in der richtigen Richtung bewegt hat, dass der Taster 20 oder 37 ein Nullsignal abgibt. Da aber der Schlitten 4 die Referenzposition noch nicht erreicht hat, wird der Schlittenantrieb 6 wieder in Bewegung gesetzt bis er durch den Einstellzyklus 29 infolge eines Fehlersignals des Tasters 20 oder 37 wieder abgestellt wird. So erfolgt eine wechselweise Planschieber- und Schlittenverstellung bis die Referenzposition des Schlittens 4 erreicht und der Taster 20 oder 37 ein Nullsignal abgibt.

Ist der Planschieber auf den gewünschten Radius eingestellt, so bewegt sich der Schlitten 4 wieder vom Taster 20 oder 37 weg. Hat er die Vorposition überschritten, so wird die Kupplung 23 ausgerückt und die Keilgabel 26, sofern vorhanden, wird zurückgezogen, so dass der Planschieber 14 in der neuen Radialposition durch die Planschieberklemmung festgeklemmt wird.

Bei Anordnung zweier Taster 20 und 45 gemäss Fig. 2 verzichtet man auf die Mitarbeit des Maschinenmesssystems 8 bei der Ermittlung der Referenzposition für den Schlitten 4. Da der eine Taster, beispielsweise Taster 20, ein Nullsignal abgibt und der andere Taster, beispielsweise Taster 45, ein Wegsignal abgibt, muss die gewünschte Planschieberverstellung dem Wegsignal des Tasters 45 entsprechen wenn Taster 20 gleichzeitig ein Nullsignal aussendet. Der Schlitten 4 bzw. der Schlittenantrieb 6 und der Verstellantrieb 21 werden vom Einstellzyklus 29 so gesteuert, dass die Taster 20 und 45 die obenbeschriebenen, gewünschten Signale abgeben, womit die Einstellung beendet ist. Durch diese Anordnung lassen sich weitere Fehlerquellen die die Genauigkeit der Zerapanungsmaschine 1 beeinflussen, vermeiden. Dies betrifft die Ausbiegung der Spindel 10, Ungenauigkeiten des Maschinenmesssystems 8, thermische Ausdehnungen etc.

Ist es vorgesehen, mit Planverstellköpfen 12 zu arbeiten, die unterschiedliche Ausladung haben, so kann dem Taster 20 oder 37 ein Lineal 38 vorgeschaltet werden, wie dies aus Fig. 3 bekannt ist.

Patentansprüche

1. Vorrichtung zur automatischen Verstellung der Radialposition eines Planschiebers (14) eines Planverstellkopfes (12) an einer Zerspanungsmaschine (1) mit einer drehbaren Spindel (10) zur Aufnahme des Planverstellkopfes (12) dessen Planschieber (14) mittels einem Verstellantrieb (21) und einem Verstellmechanismus (16) in einer Planverstellrichtung (44) verschiebbar angeordnet ist, mit einem die Spindel (10) aufnehmenden, in einer Schlittenbewegungsrichtung (43) quer zur Spindel (10) verschiebbaren Schlitten (4) sowie mit einer numerischen Steuerung (28), gekennzeichnet durch eine Spindelindexiervorrichtung (18)zum Indexieren der Planverstellrichtung (44) des Planverstellkopfes (12) parallel zur Schlittenbewegungsrichtung (43), durch einen Taster (20), der mit dem Verstellantrieb (21) für den Verstellmechanismus (16) am einen Ende des Schlittenverschiebeweges fest angeordnet ist, sowie durch einen Einstellzyklus (29) der numerischen Steuerung (28) der über Leitungen (32,33) mit dem Taster (20) und dem Verstellantrieb (21) verbunden ist und mit dem Taster (20) und dem Verstellantrieb (21) derart zusammenwirkt, dass in einer mit dem gewünschten Verstellbetrag (R-R$_t$) behafteten, durch die numerische Steuerung (28) vorgegebenen Referenzposition des Schlittens (4), die erforderliche Planverstellrichtung (44) des Planschiebers (14) erkannt und als Ausgleichs bewegung eingeleitet wird, bis der offene Verstellbetrag erreicht ist.

2. Vorrichtung gemäss Anspruch 1, dadurch gekennzeichnet, dass der Taster (20) auf eine Referenzfläche (36) am Planschieber (14) ausgerichtet ist.

3. Vorrichtung gemäss Anspruch 1, dadurch gekennzeichnet, dass der Taster (20) auf die Spitze (42) eines Werkzeuges (15) des Planschiebers (14) ausgerichtet ist.

4. Vorrichtung gemäss Anspruch 1,2 oder 3 dadurch gekennzeichnet, dass dem Taster (20) ein Tastlineal (38) in
einer Gelenkviereckanordnung vorgeschaltet ist.

5. Vorrichtung gemäss Anspruch 1, dadurch gekennzeichnet,
dass der Taster (20,37) als Nullanzeiger ausgebildet
ist.

6. Vorrichtung gemäss Anspruch 1,2,3 oder 6 dadurch gekennzeichnet, dass ein weiterer Taster (45) vorgesehen
ist, der auf eine Referenzfläche (46) am Spindeleinsatz (13) ausgerichtet ist, und der als Wegmesssystem
ausgebildet ist.

7. Vorrichtung gemäss Anspruch 1, dadurch gekennzeichnet,
dass zwischen dem Verstellantrieb (21) und dem Verstellmechanismus (16) des Planschiebers (14) eine
Kupplung (23) vorgesehen ist.

8. Vorrichtung gemäss Anspruch 1, dadurch gekennzeichnet,
dass am einen Ende des Schlittenverschiebeweges eine
Vorrichtung zum Lösen einer Planschieberklemmung vorgesehen ist.

9. Vorrichtung gemäss Anspruch 8, dadurch gekennzeichnet,
dass die Vorrichtung aus einer ausfahrbaren Keilgabel
(26) besteht.

FIG. 1

FIG. 2

FIG. 3

Europäisches
Patentamt

**EUROPÄISCHER RECHERCHENBERICHT**

**0093288**

Nummer der Anmeldung

EP 83 10 3549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 250 775 (DE VLIEG MACHINE CO.) <br> * Spalte 2, Zeile 34 - Spalte 5, Zeile 31; Figur 9 * | 1 | G 05 B 19/18 |
| Y | DE-A-2 804 011 (TEAMTECHNIK GESELLSCHAFT FÜR ENTWICKLUNG UND VERTRIEB VON MASCHINEN UND ANLAGEN) <br> * Ansprüche 1,2; Seite 19, Zeile 14 - Seite 20; Figuren 1,2 * | 1,7 | |
| A | US-A-3 845 532 (TEXTRON) <br> * Zusammenfassung * | 1 | |
| A | US-A-4 033 206 (DAIHATSU MOTOR) <br> * Spalte 6, Zeile 27 - Zeile 69; Figuren 1-3 * | 1,3 | RECHERCHIERTE SACHGEBIETE (Int. Cl. ³) <br><br> G 05 B <br> B 23 B |

Der vorliegende Recherchenbericht wurde für alle Patentansprüche erstellt.

| Recherchenort <br> DEN HAAG | Abschlußdatum der Recherche <br> 04-07-1983 | Prüfer <br> CORNILLIE O.A.R. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument